# EUROPÄISCHE PATENTSCHRIFT

(11) **EP 0 892 163 B1**
(45) Veröffentlichungstag und Bekanntmachung des Hinweises auf die Patenterteilung: **08.10.2003**
(21) Anmeldenummer: 98112704.6
(22) Anmeldetag: 09.07.1998
(51) Int. Cl.: F02D 9/00, F02B 47/00, F02D 17/00

(54) **Einzelzylinderandrosselung unter Einbeziehung der Abgasrückführung**
Throttling individual cylinders while recirculating exhaust gas
Etranglement des cylindres individuels et recirculation des gaz d'échappement

(30) Priorität: 19.07.1997 DE 19731129
(43) Veröffentlichungstag der Anmeldung: 20.01.1999
(73) Patentinhaber: Volkswagen Aktiengesellschaft, 38436 Wolfsburg (DE)
(72) Erfinder: Pott, Ekkehard, Dipl.-Ing., 38518 Gifhorn (DE)
(74) Vertreter: Meyer, Enno, Dr.

(56) Entgegenhaltungen:
- EP-A- 0 489 263
- DE-A- 3 810 750
- US-A- 4 117 813
- US-A- 4 231 339
- US-A- 4 284 056
- US-A- 4 323 045
- US-A- 5 329 912

## Beschreibung

Die Erfindung betrifft den selektiven Fett-Betrieb einzelner Zylinder einer Brennkraftmaschine unter Einbeziehung der Abgasrückführung und eine Vorrichtung zur Durchführung des selektiven Fettbetriebs.

Um bei Brennkraftmaschinen eine Anfettung des Abgases zu erreichen, beispielsweise zur De-Sulfatierung und/oder Regeneration eines NOx-Speichers, ist es bekannt, Abgas, das aus der gemeinsamen Abgasleitung entnommen wird, in das gemeinsame Saugrohr vor der Brennkraftmaschine rückzuführen. Ferner ist zumindest bei Saug-Dieselmotoren eine Anhebung der Abgasrückführrate durch Androsseln der angesaugten Frischluft über eine Sammeldrosselklappe bekannt.

Weiterhin ist bekannt, einzelne Zylinder einer Brennkraftmaschine durch Anordnen einer Einzeldrosselklappe in der direkten Saugleitung des Zylinders zu drosseln. Allerdings ist es mit dieser Maßnahme nicht möglich, einen fast sauerstoffreien Abgasstrom zu erzeugen.

US-A-4117813 und US-A-4323045 betreffen eine Brennkraftmaschine, bei der das Abgas in die Einzelanssaugrohre der Zylindern rückgeführt wird, wobei die Zylinder Einzeldrosselklappen aufweisen

Bei der Brennkraftmaschine nach US-A-4231339 wird das Abgas nur in das Sammel-Ansaugrohr aller mit Einzeldrosselklappen versehenen Zylindern rückgeführt.

Die US-A-43230545 beschreibt eine Brennkraftmaschine mit Rückführung des Abgases in die Einzelansaugrohre von Zylindern mit Einzeldrosselklappen über zwei Ventile im AGR-System.

Der Erfindung liegt daher die Aufgabe zugrunde, eine Brennkraftmaschine mit Einzelzylinderandrosselung unter Einbeziehung einer Abgasrückführung zu schaffen, in der einfach und sicher der Sauerstoffanteil im angesaugten Gas vermindert werden kann, und ein Verfahren zum selektiven Vermindern des Sauerstoffanteils im angesaugten Gas zu schaffen.

Die Aufgabe wird durch die Merkmale der Ansprüche 1 und 5 gelöst. Bevorzugte Ausgestaltungen der Erfindung sind Gegenstand der Unteransprüche.

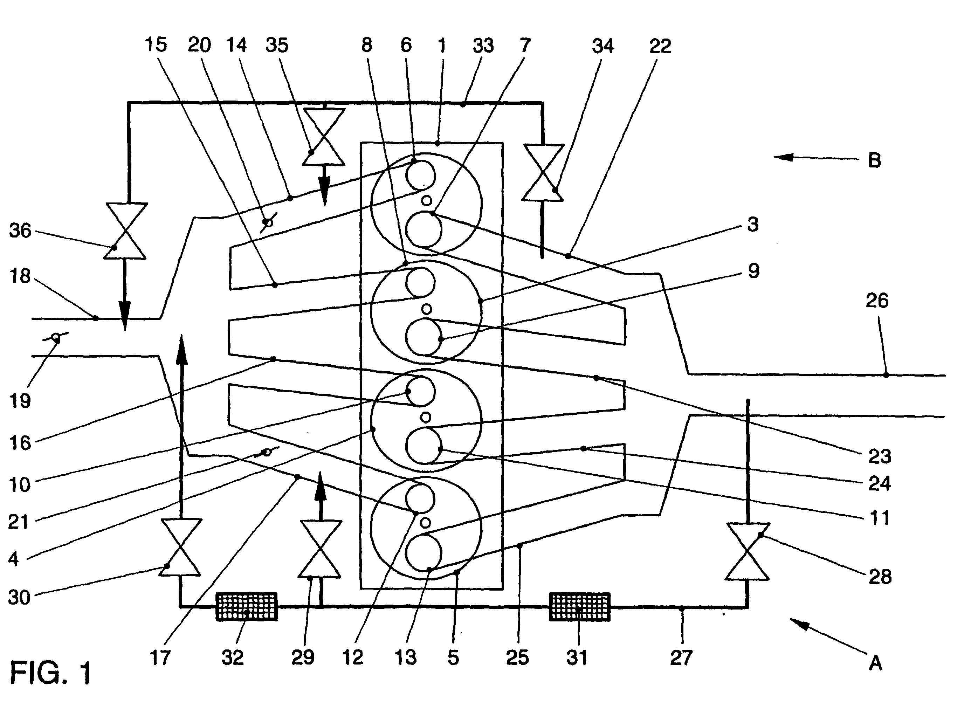

Die Erfindung ist nachfolgend anhand der beigefügten Figur erläutert, worin
- Fig. 1: eine schematische Darstellung eines Vierzylindermotors mit Einzelzylinderandrosselung und Abgasrückführung zeigt.

Fig. 1 zeigt eine schematische Ansicht einer zylinderselektiven Drosselung und Abgasrückführung bei einer Brennkraftmaschine. Dargestellt ist eine Brennkraftmaschine 1 mit vier Zylindern 2, 3, 4, 5 und jeweiligen Ein- und Auslaßventilen 6, 7; 8, 9; 10, 11; 12, 13. Die Einlaßventile sind über direkte Zylinderansaugrohre 14, 15, 16, 17 mit einem gemeinsamen Ansaugrohr 18 verbunden. In dem gemeinsamen Ansaugrohr 18 ist eine Sammeldrosselklappe 19 angeordnet. Weiter sind hier in der Fig. 1 beispielhaft in dem Zylinderansaugrohr 14 des ersten Zylinders und dem Zylinderansaugrohr 17 des vierten Zylinders jeweils eine Einzeldrosselklappe 20, 21 zur selektiven Androsselung des ersten bzw. vierten Zylinders 2, 5 angeordnet.

Die Auslaßventile 7, 9, 11, 13 der entsprechenden Zylinder 2, 3, 4, 5 sind mit direkten Zylinderabgasrohren 22, 23, 24, 25 verbunden, die in ein gemeinsames Abgasrohr 26 münden. Dargestellt anhand des ersten bzw. des vierten Zylinders 2, 5 sind zwei Alternativen der Abgasrückführung. In der Alternative A wird das Abgas über eine Abgasrückführleitung 27 aus dem gemeinsamen Abgasrohr 26 über ein Ventil 28 entnommen und über ein Ventil 29 in das Zylinderansaugrohr 17 des vierten Zylinders 5 stromabwärts der Einzeldrosselklappe 21 zugeführt. Ferner ist es möglich, die Abgasrückführleitung 27 zu verlängern und über ein weiteres Ventil 30 das Abgas zusätzlich oder ausschließlich in das gemeinsame Ansaugrohr 18 einzugeben, so daß das Abgas einerseits in das Zylinderansaugrohr und/oder in das gemeinsame Ansaugrohr eingeführt werden kann. In der Abgasrückführleitung 27 können Abgasrückführkühler 31 und/oder 32 angeordnet sein.

In der Alternative B wird das Abgas über eine Abgasrückführleitung 33 direkt dem Zylinderabgasrohr 22 des ersten Zylinders 2 entnommen und in das direkte Zylinderansaugrohr 14 des ersten Zylinders 2 stromabwärts der Einzeldrosselklappe 20 gegeben. Auch hier ist die Abgasrückführleitung 33 mit Ventilen 34, 35 zum Entnehmen und Zuführen des Abgases versehen. Zusätzlich oder statt dessen ist es ebenfalls möglich, die EGR-Leitung 33 zu verlängern und über ein weiteres Ventil 36 das Abgas dem gemeinsamen Saugrohr 18 zuzuführen. Nicht dargestellt in der Alternative B ist die mögliche Anordnung von Kühlern in der EGR-Leitung 33.

Ferner ist eine Mischung der Alternativen möglich, d.h. eine Versorgung der gedrosselten Zylinder mit Abgas der Entnahmestellen gemäß der Alternative A und der ungedrosselten Zylinder mit Abgas der Entnahmestelle gemäß Alternative B. Die Zumessung der gesamten Abgas-Rückführmenge kann über das Entnahmeventil 27, 34 sowie gegebenenfalls über die Stellung der Sammeldrosselklappe 19 erfolgen. Die Zumessung des Abgas-Rückführmengenanteils an die gedrosselten Zylinder 2, 5 erfolgt über die Stellung der Einzeldrosselklappe 20, 21 (Änderung des Saugunterdrucks gegenüber den ungedrosselten Zylindern) und/oder die Stellung der Ventile 27, 28 bzw. 35, 36.

### BEZUGSZEICHENLISTE

- 1 -: Motor
- 2 -: Zylinder
- 3 -: Zylinder
- 4 -: Zylinder
- 5 -: Zylinder
- 6 -: Einlaßventil
- 7 -: Auslaßventil
- 8 -: Einlaßventil
- 9 -: Auslaßventil
- 10 -: Einlaßventil
- 11 -: Auslaßventil
- 12 -: Einlaßventil
- 13 -: Auslaßventil
- 14 -: Zylinderansaugrohr
- 15 -: Zylinderansaugrohr
- 16 -: Zylinderansaugrohr
- 17 -: Zylinderansaugrohr
- 18 -: Ansaugrohr
- 19 -: Sammeldrosselklappe
- 20 -: Einzeldrosselklappe
- 21 -: Einzeldrosselklappe
- 22 -: Zylinderabgasrohr
- 23 -: Zylinderabgasrohr
- 24 -: Zylinderabgasrohr
- 25 -: Zylinderabgasrohr
- 26 -: Abgasrohr
- 27 -: Abgasrückführleitung
- 28 -: Ventil
- 29 -: Ventil
- 30 -: Ventil
- 31 -: Kühler
- 32 -: Kühler
- 33 -: Abgasrückführleitung
- 34 -: Ventil
- 35 -: Ventil
- 36 -: Ventil

## Patentansprüche

1. Verfahren zur Abgasrückführung beim Betrieb einer Brennkraftmaschine, wobei die Brennkraftmaschine (1) mindestens einen drosselbaren Zylinder (2, 5) aufweist, in dessen direktem Zylinderansaugrohr (14, 17) eine Einzeldrosselklappe (20, 21) angeordnet ist, wobei das rückzuführende Abgas in das direkte Zylinderansaugrohr (14, 17) des mit einer Einzeldrosselklappe (20, 21) versehenen drosselbaren Zylinders (2, 5) rückgeführt wird,
**dadurch gekennzeichnet, daß**
das rückzuführende Abgas auch in das gemeinsame Ansaugrohr (18) aller Zylinder rückgeführt wird, wobei nur ein Teil der Zylinder mit einer Einzeldrosselklappe (20, 21) versehen ist.

2. Verfahren nach Anspruch 1, **dadurch gekennzeichnet, daß** das rückzuführende Abgas dem Gesamtabgasstrom der Brennkraftmaschine (1) entnommen wird.

3. Verfahren nach Anspruch 1, **dadurch gekennzeichnet, daß** das rückzuführende Abgas des jeweiligen Zylinderabgasrohrs (22) des gedrosselten Zylinders (2) entnommen und in sein Zylinderansaugrohr (14) zugeführt wird.

4. Verfahren nach einem der vorangegangenen Ansprüche, **dadurch gekennzeichnet, daß** das rückzuführende Abgas gekühlt wird.

5. Brennkraftmaschine (1) mit Abgasrückführung (27, 33), wobei die Brennkraftmaschine (1) mindestens einen drosselbaren Zylinder (2, 5) aufweist, in dessen direktem Zylinderansaugrohr (14, 17) eine Einzeldrosselklappe (20, 21) angeordnet ist, wobei die mit einem Ventil (28, 34) verschließbare Abgasrückführleitung (27, 33) das rückzuführende Abgas über ein zweites Ventil (29, 35) in das direkte Zylinderansaugrohr (14, 17) des einzeldrosselbaren Zylinders (2, 5) rückführt,
**dadurch gekennzeichnet, daß**
nur ein Teil der Zylinder eine Einzeldrosselklappe aufweist, und
Abgasrückführleitung (27, 33) das rückzuführende Abgas über ein drittes Ventil (30, 36) in das gemeinsame Ansaugrohr aller Zylinder rückführt.

6. Vorrichtung nach Anspruch 5, **dadurch gekennzeichnet, daß** die Abgasrückführleitung (27) das Abgas aus dem gemeinsamen Abgasrohr (26) der Brennkraftmaschine (1) entnimmt.

7. Vorrichtung nach Anspruch 5, **dadurch gekennzeichnet, daß** die Abgasrückführleitung (33) das Abgas aus dem direkten Zylinderabgasrohr (22) des drosselbaren Zylinders (2) entnimmt.

8. Vorrichtung nach einem der Ansprüche 5 bis 7, **dadurch gekennzeichnet, daß** in der Abgasrückführleitung (27) mindestens eine Kühleinrichtung (30, 31) angeordnet ist.

## Claims

1. Method for exhaust-gas recirculation during operation of an internal combustion engine, in which the internal combustion engine (1) has at least one throttleable cylinder (2, 5) with an individual throttle valve (20, 21) arranged in its direct cylinder induction pipe (14, 17), the exhaust gas which is to be recirculated being recirculated into the direct cylinder induction pipe (14, 17) of the throttleable cylinder (2, 5) provided with an individual throttle valve (20, 21), **characterized in that** the exhaust gas which is to be recirculated is also recirculated into the common induction pipe (18) of all the cylinders, only some of the cylinders being provided with an individual throttle valve (20, 21).

2. Method according to Claim 1, **characterized in that** the exhaust gas which is to be recirculated is removed from the overall exhaust-gas stream from the internal combustion engine (1).

3. Method according to Claim 1, **characterized in that** the exhaust gas which is to be recirculated is removed from the respective cylinder exhaust pipe (22) of the throttled cylinder (2) and is fed into its cylinder induction pipe (14).

4. Method according to one of the preceding claims, **characterized in that** the exhaust gas which is to be recirculated is cooled.

5. Internal combustion engine (1) with exhaust-gas recirculation (27, 33), the internal combustion engine (1) having at least one throttleable cylinder (2, 5) with an individual throttle valve (20, 21) arranged in its direct cylinder induction pipe (14, 17), the exhaust-gas recirculation line (27, 33), which can be closed off by means of a valve (28, 34), recirculating the exhaust gas which is to be recirculated, via a second valve (29, 35), into the direct cylinder induction pipe (14, 17) of the individually throttleable cylinder (2, 5), **characterized in that** only some of the cylinders have an individual throttle valve, and the exhaust-gas recirculation line (27, 33) recirculates the exhaust gas which is to be recirculated, via a third valve (30, 36), into the common induction pipe of all the cylinders.

6. Device according to Claim 5, **characterized in that** the exhaust-gas recirculation line (27) removes the exhaust gas from the common induction pipe (26) of the internal combustion engine (1).

7. Device according to Claim 5, **characterized in that** the exhaust-gas recirculation line (33) removes the exhaust gas from the direct cylinder exhaust pipe (22) of the throttleable cylinder (2).

8. Device according to one of Claims 5 to 7, **characterized in that** at least one cooling means (30, 31) is arranged in the exhaust-gas recirculation line (27).

## Revendications

1. Procédé de recirculation de gaz d'échappement dans l'exploitation d'un moteur à combustion interne, le moteur à combustion interne (1) présentant au moins un cylindre (2, 5) à débit réglable, dans la tubulure d'aspiration directe (14, 17) duquel est implanté un volet de réglage individuel (20, 21), les gaz d'échappement à réalimenter étant réalimentés dans la tubulure d'aspiration directe (14, 17) du cylindre à débit réglable (2, 5) équipé d'un volet de réglage individuel (20, 21),
**caractérisé en ce que**
les gaz d'échappement à réalimenter sont également réalimentés dans le collecteur d'aspiration (18) de tous les cylindres, une partie seulement des cylindres étant équipée d'un volet de réglage individuel (20, 21).

2. Procédé selon la revendication 1, **caractérisé en ce que** les gaz d'échappement à réalimenter sont prélevés sur le flux de gaz d'échappement total du moteur à combustion interne (1).

3. Procédé selon la revendication 1, **caractérisé en ce que** les gaz d'échappement à réalimenter de la tubulure de gaz d'échappement (22) du cylindre étranglé (2) sont prélevés et acheminés dans sa tubulure d'aspiration (14).

4. Procédé selon l'une des revendications qui précèdent, **caractérisé en ce que** les gaz d'échappement à réalimenter sont refroidis.

5. Moteur à combustion interne (1) avec recirculation des gaz d'échappement (27, 33), le moteur à combustion interne (1) présentant au moins un cylindre (2, 5) à débit réglable, dans la tubulure d'aspiration directe (14, 17) duquel est implanté un volet de réglage individuel (20, 21), la conduite de recirculation des gaz d'échappement (27, 33) pouvant être fermée par une soupape (28, 34) réalimentant les gaz d'échappement à réalimenter via une deuxième soupape (29, 35) dans la tubulure d'aspiration directe (14, 17) du cylindre à débit variable (2, 5),
**caractérisé en ce que**
seule une partie des cylindres présente un volet de réglage individuel et **en ce que** la conduite de recirculation des gaz d'échappement (27, 33) réalimente les gaz d'échappement à réalimenter via une troisième soupape (30, 36) dans le collecteur d'aspiration de tous les cylindres.

6. Dispositif selon la revendication 5, **caractérisé en ce que** la conduite de recirculation des gaz d'échappement (27) prélève les gaz d'échappement sur le collecteur d'échappement (26) du moteur à combustion interne (1).

7. Dispositif selon la revendication 5, **caractérisé en ce que** la conduite de recirculation des gaz d'échappement (33) prélève les gaz d'échappement sur la tubulure de gaz d'échappement directe (22) du cylindre (2) à débit variable.

8. Dispositif selon l'une des revendications 5 à 7, **caractérisé en ce qu'**au moins un dispositif de refroidissement (31, 32) est mis en place dans la conduite de recirculation des gaz d'échappement (27).
